# EUROPEAN PATENT APPLICATION

(11) **EP 2 179 656 A1**
(43) Date of publication of application: **28.04.2010**
(21) Application number: 09013444.6
(22) Date of filing: 23.10.2009
(51) Int. Cl.: A22C 7/00

(54) **System for stacking and unstacking mold units**

(30) Priority: 24.10.2008 US 108267 P
(71) Applicant: Cremona Inoxidable S.r.l., Buenos Aires (AR)
(72) Inventor: Abascal Albizu, Juan Jose, 1439 Buenos Aires (AR); Trinco, Sergio Renato, 1417 Buenos Aires (AR)
(74) Representative: Fernandez Lerroux, Aurelio

(57) **Abstract**

A system for stacking and/or unstacking stackable units in a units-handling installation, wherein the system comprises a frame carrying holding means for taking a stackable unit at a time from a stack of units and remove the units, one at a time, from the stack, and for taking units provided at the system to stack them into a stack of units, and conveyor means for receiving units to be stacked and delivering unstacked units out of the system.

## Description

### BACKGROUND OF THE INVENTION

### 1. Field of the Invention.

The present invention relates to the field of industry installations for molding and cooking food products, preferably under the effect of warm and/or cold water and, more particularly refers to a new stacking and/or unstacking system for handling mold units of the type employed to contain a meat based food product to be molded, pressed and cooked, and more particularly the invention refers to a new stacking and/or unstacking system for use in a continuous line cooking installation employing a plurality of stacked mold units to be subject to a cold/warm fluid under a rain or spray pattern, in a raising vapour pattern or in an immersion pattern.

### 2. Description of the Prior Art.

It is well known to use warm or hot water to cook food products and particularly molded products. The installations to manufacture molded and cooked food products are generally comprised of structures capable of handling and stacking mold units or baking moulds which have a stackable capacity. Once these mold units are stacked into a stack formed by a number of stackable molds the stack is conveyed to a big container or tank and warm water is supplied into the container until the stack of mold units are entirely covered by the water. Once the necessary time has passed to guarantee that the food product is properly cooked, the water is pumped away and the stack of molds are removed from the tank. In other cooking systems, the stack of molds are conveyed into a tunnel to be subject to the action of spray, rain and/or vapour for cooking purposes.

The molds employed in these installations are well know and are generally comprised of a plurality of adjacent compartments or cells to contain the food product in corresponding food product units. The molds also have guide means to enable each stackable mold unit to be stacked on an identical stackable mold unit located underneath. These molds generally have different designs basically comprised of a tray like unit having such adjacent compartments separated by longitudinal and transverse inner walls with outer longitudinal or side walls and outer transverse or front walls, defining the perimeter of the mold unit.

Stackable units of the above mentioned type are disclosed in several patent documents such as EP 0292917 that discloses a stackable set comprising front legs and rear legs with stops in order that the set can be stacked and destacked by means of manipulators. Other stackable units are disclosed in EP 0463983; EP 1201129 and EP 1473999, disclosing a stacking unit provided with support means and guide means to guide the stacking unit when stacking said stacking unit on another identical stacking unit.

As indicated above, all the cited and know stacking mold units are provided with support means, legs and guiding means to guide the units one onto each other, and may be handled manually by operators or automatically by specially designed installations, during the steps of filling the compartments with the meat based product, during the stacking of the stacking molds into a stacking tower, during the unstacking of the mold units from the stacking tower as well as during de removal of the cooked products and cleaning of the molds. Modern installations have machines for extruding the blended food product, such as a ham, into casings to produce the molded product. This process, called stuffing, consists of stuffing the meat, for example, into synthetic or natural animal casings at speeds that are dramatically high, such as to stuff 25 pieces of ham per minute, for example. This causes the rest of the installation to be updated to follow this production speed without the need of stopping the stuffing while waiting for placing the pieces into the mold units.

While the known automatic installations work acceptable well in installations with conventional machines, they may fail to accompany the high stuffing speeds by permitting to handle, such as stacking and/or unstacking, the mold units at a speed that the molds are empty, clean and available to be loaded by the continuously stuffed pieces or unmolded after cooking. One of the reasons why the known stacking and unstacking system may not work as rapid as the stuffing systems is that the conventional stacking/unstacking systems form a stack by placing one mold onto the other, starting from the first mold at the bottom and ending by placing the last mold at the upper end of the stack, with the stack remaining stationary. Depending on the number of molds, when stacking, the machine must move up and down to take the mold from the below level and move up, all along the vertical stack, to place the molds up to the upper part of the stack. And viceversa, when unstacking the molds, the machine must move up and down to take a mold from the upper end of the stack and carry it to the bottom level. These operations take time and involve high energy consumption.

It would be therefore very convenient to have a new system for stacking and/or unstacking molds at a high speed, to receive food product-containing molds along a conveyor, stack the molds into a stack before entering a cooking a station, to quickly unstack the molds containing the food product at the exit of the cooking station for removing the food product, as well to receive empty molds along a conveyor and quickly stack the molds into a stack before entering a station wherein the raw food product is placed into the compartments of the mold for a new cooking circuit.

### SUMMARY OF THE INVENTION

It is therefore an object of the invention to provide a new system for quickly stacking and/or unstacking stackable mold units or trays that must be handled in a handling in-line installation, preferably for units containing food products to be subject to a cooking procedure.

It is still another object of the present invention to provide a system for stacking and/or unstacking, in a high speed pattern, stackable units in a units-handling installation, wherein the system comprises a frame carrying holding means for taking a stackable unit at a time from a stack of units and remove the units, one at a time, from the stack, and for taking units provided at the system to stack them into a stack of units, and conveyor means for receiving units to be stacked and delivering unstacked units out of the system.

It is even another object of the present invention to provide a system for quickly stacking and/or unstacking stackable units in a units-handling installation, preferably a food process installation, wherein the system comprises a frame for receiving and delivering at least one stackable unit, vertically moving holding means for holding a stackable unit at a time and for moving up and down between a lower position and an upper position, retaining means in said vertically moving holding means for moving between a retaining position to retain a stackable unit in the holding means and a releasing position to release the stackable unit from the holding means, conveyor means at a conveyor level below the lower position reached by the vertically moving holding means, and motor means for actuating the vertically moving holding means and the conveyor means.

The above and other objects, features and advantages of this invention will be better understood when taken in connection with the accompanying drawings and description.

### BRIEF DESCRIPTION OF THE DRAWINGS

The present invention is illustrated by way of example in the following drawings wherein:
Figure 1 shows a perspective view of a stacking and/or unstacking system according to a preferred embodiment of the invention;
Figure 2 shows a perspective, partially exploded, view of the system of Figure 1;
Figure 3 shows a perspective view of the system of Figure 1 with the conveyor means removed for clarity purposes;
Figure 4 shows a perspective partial view of the system of Figure 1;
Figure 5 shows a perspective partial view of the system of Figure 1;
Figure 6 shows a perspective, partial cross-sectional view of the retaining means, in extended position, of the system of Figure 1;
Figure 7 shows a perspective, partial cross-sectional view of the retaining means, in retracted position, of Figure 6;
Figure 8 shows a schematic side elevation view of a sequence of handling stackable units by two systems of Figure 1;
Figure 9 shows a schematic top plant view of the sequence of handling stackable units by the two systems of Figure 8;
Figures 10-14 show a perspective view of a sequence of handling stackable units by the system of Figure 1, and
Figure 15 shows a perspective view of a stacking and/or unstacking system according to another embodiment of the invention.

### DESCRIPTION OF THE PREFERRED EMBODIMENTS

Now referring in detail to the invention, the same refers to a system to be employed in an installation wherein a plurality of stackable units, such as trays, mold units and the like must be handled, preferably at a continuous in-line process and more preferably for an installation of the foodstuff industry such as in a process of molding and cooking a meat based product.

For illustrative purposes only, the units, generally indicated by reference "U" in the drawings, are defined by outer peripheral walls and inner vertical walls defining a plurality of compartments for receiving the food product to be cooked and molded. In convenient peripheral walls, preferably at opposed side walls, the unit is provided with openings or anchoring means for taking or holding the mold unit. While the present description makes reference to mold units designed by the applicant and disclosed in Provisional Application US 61/108,267, the system of the invention may operate with other mold units, well known in the art, and only some adaptations would be necessary without departing from the scope of the invention.

Taking advantage of the openings and/or anchoring means of the mold units, the system of the invention is designed to automatically retain, pick up and release a mold unit at a time to form a stack of units or to unstuck the units from an already formed stack.

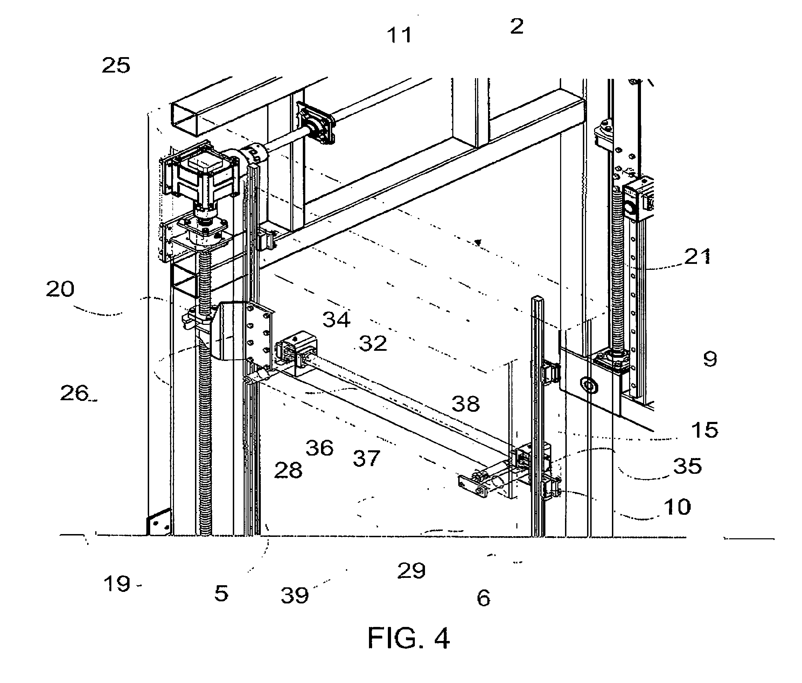

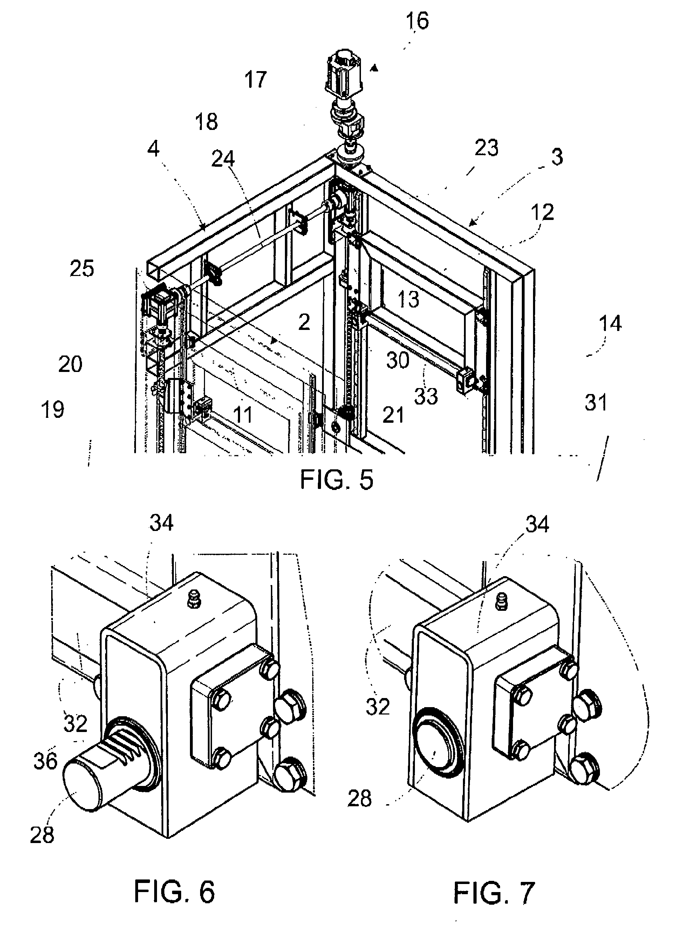

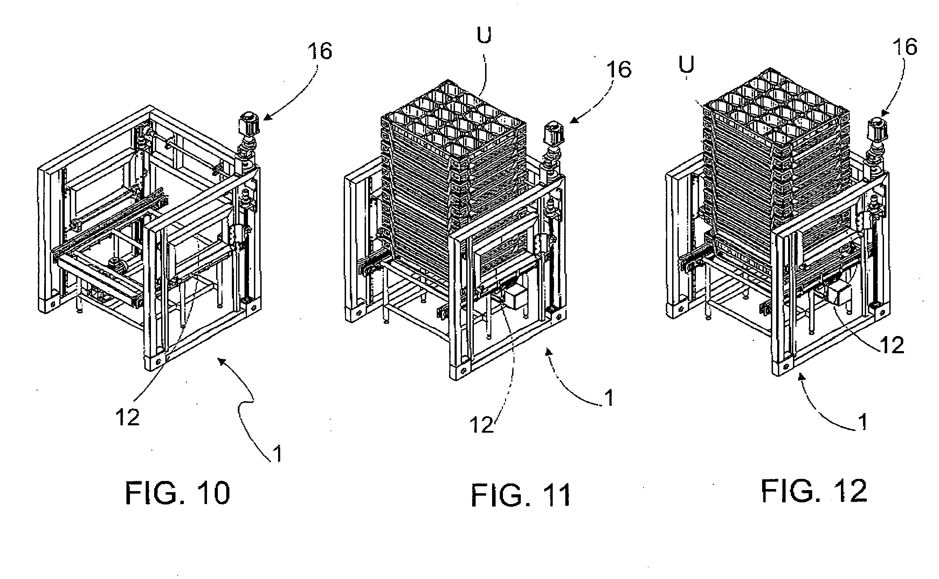

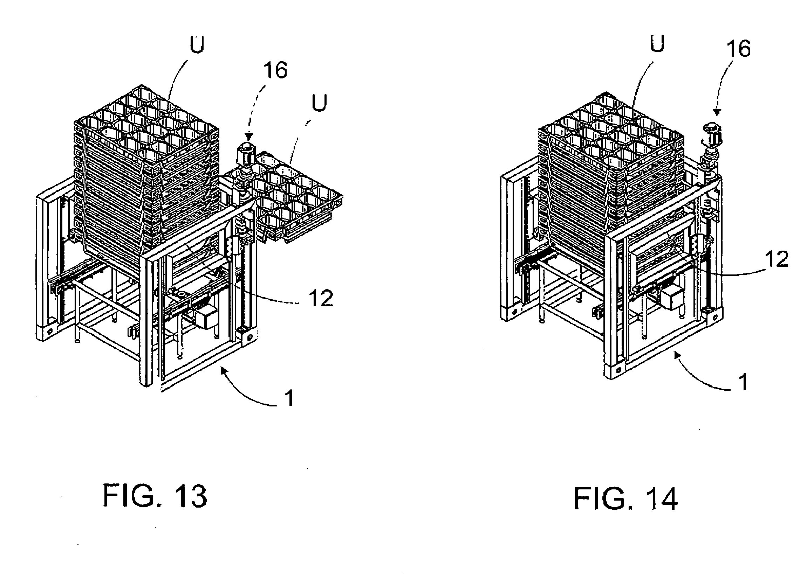

According to the invention a system for stacking and/or unstacking stackable units, generally indicated by reference 1, comprises a frame 2 for receiving and delivering at least one stackable unit "U", and vertically moving holding means for holding a stackable unit at a time and for moving up and down between a lower position, shown in Figures 10, 11, 14, and an upper position, shown in Figures 12, 13. Frame 1 comprises two side frame portions 2, 3 and a cross frame portion 4 connected to the side frame portions and each side frame portion 2, 3 includes at least one vertical guide and preferably two parallel guides 5, 6 in side frame portion 2, and two parallel guides 7, 8 in side frame portion 3. At least one slider, and preferably two sliders, indicated by references 9, 10 in Figure 4, is slidably mounted along each one of the two guides 5, 6 and 7, 8. Side frame portion 2 is illustrated in phantom lines in Figures 4 and 5 in order to see some components such as the sliders and other parts as will be described later.

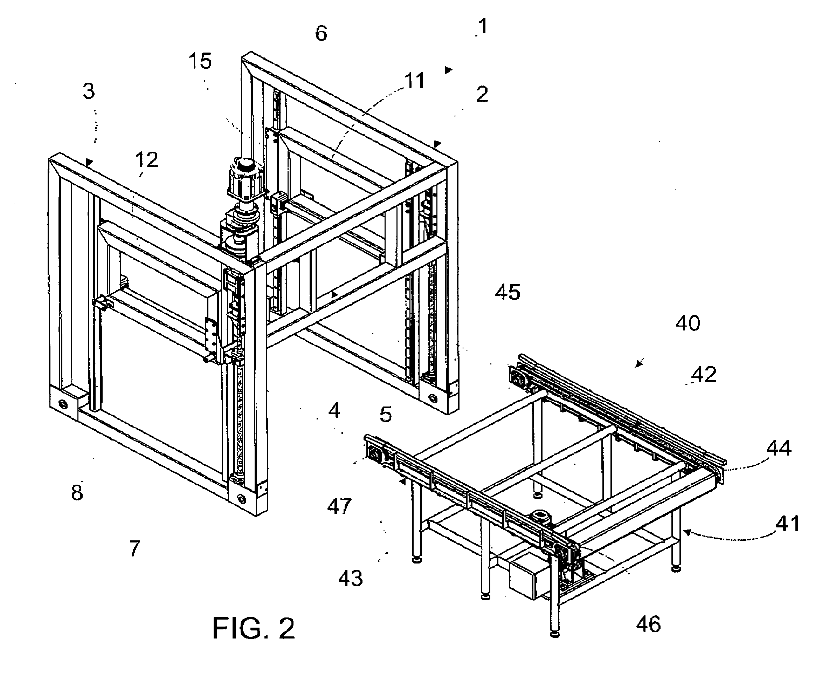

The holding means, mounted in the frame to move vertically on the same, comprises a holding carrier 11, 12 at each side frame portion 2, 3. Each carrier, 11 in side frame 2, and 12 in side frame portion 3, for example, is comprised of a rectangular frame with vertical and horizontal respectively parallel bars. The holding carrier associated to the corresponding side frame portion, for example carrier 11 in portion 2, is slidably mounted on guides 5, 6 to move up and down along the guides. Thus, each holding carrier associated to the corresponding guides includes two side ears. For example, carrier 12 includes side ears 13, 14, and carrier 11 includes identical ears 15, 16 shown in Figure 2, in solid lines, with ear 15 shown in Figure 4 in phantom line. As better shown in Figure 4, each ear is connected to a pair of corresponding sliders. For example, ear 15 is fixed to sliders 9, 10 as shown in Figure 4 while all the ears are connected in similar manner. Each holding carrier is therefore slidably mounted along corresponding guides 5, 6, 7, 8 to move vertically.

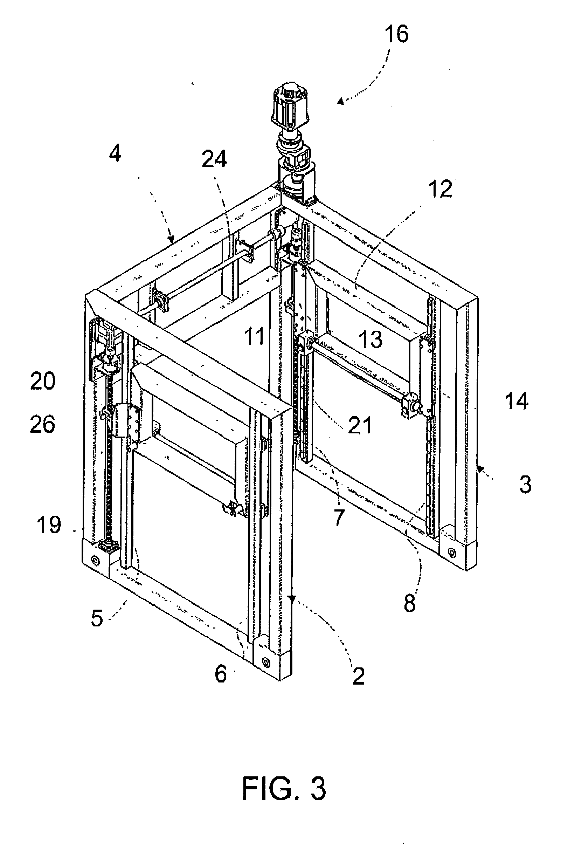

To move the holding carriers, motor means are provided which comprises a first motor 16 mounted in said frame and connected to a screw and nut transmission assembly for moving the holding carrier up and down. First motor may comprise an electric motor 17 with a servo, transmission box and brake assembly, generally indicated by 18 in Figure 5. The screw and nut transmission assembly preferably comprises a vertical endless screw 19 mounted in side frame portion 2, with a ball nut 20 movable mounted along screw 19, and a vertical endless screw 21 mounted in side frame portion 3, with a ball nut 22 movable mounted along screw 21. Motor 17 is connected to screw 21 through assembly 18 and preferably a transmission box 23, not shown in Figure 3 for clarity purposes but clearly illustrated in Figure 5. To box 23 is connected an end of a transmission bar 24 having an opposite end connected to a similar transmission box 25 which in turn is connected in transmission relationship to endless screw 19, as better shown in figure 5.

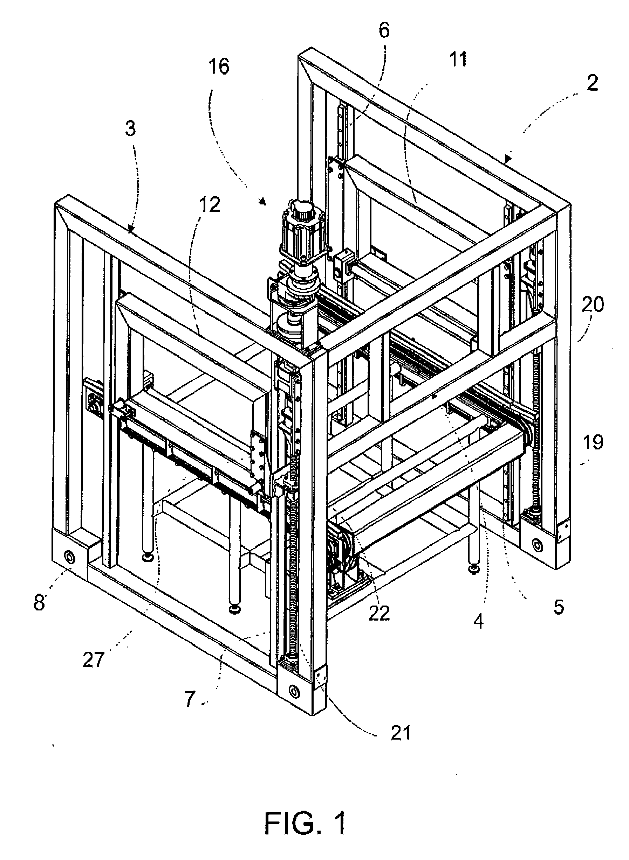

According to the above transmission mechanism, first motor 17 actuates screws 19, 21 in order to rotate the same and cause nuts 20, 22 move up and down, depending on the rotation sense, along the screws. Holding carriers which needs to move up and down are therefore connected to nuts 20, 22. Thus, carrier 11 is connected to sliding nut 20 by means of a bracket 26, Figures 3, 4, and carrier 12 is connected to sliding nut 22 by means of a bracket 27, Figure 1.

Also according to the invention and in order to engage, retain and release a stackable mold unit holding carrier 11, 12 is provided with retaining means capable of moving between a retaining position to retain a stackable unit in the holding means and a releasing position to release the stackable unit from the holding means. The retaining means, at each holding carrier, comprise a pair of retracting pins 28, 29, 30, 31, for moving between an extended position to engage and retain the stackable unit and a retracted position to disengaged and release the stackable unit. The retracting pins will be mounted in each holding carrier, duly housed in corresponding housings and the pins in a holding carrier will be connected to each other through a transmission mechanism, preferably a transmission bar 32, 33 actuated by an actuating cylinder reference to which is made in connection to Figure 4.

Detailed description will be made only in reference to pins 28, 29 of holding carrier 11, in Figures 4, 6, 7, however this is applicable also to pins 30, 31 of carrier 12. Each pin 28, 29 is housed into a housing 34, 35 and is connected to each other through bar 32. Each pin is provided with a toothed portion 36 and each end of bar 32 is provided with a gear engaged in the toothed portion, in a manner that when bar 32 rotates the pin is moved from a retracted position, as shown in Figure 7, an extended position, as shown in Figure 6. To cause the rotation of bar 32 and extension and retractions of pins 28, 29, a fluid actuated cylinder 38 is provided which is connected to one of the pins 29 by a connection plate 39. Thus, the extension of cylinder 38 moves the pin to a retracted position, as shown in Figures 4, 7, and the retraction of cylinder 38 moves the pin to the extended position shown in Figure 6.

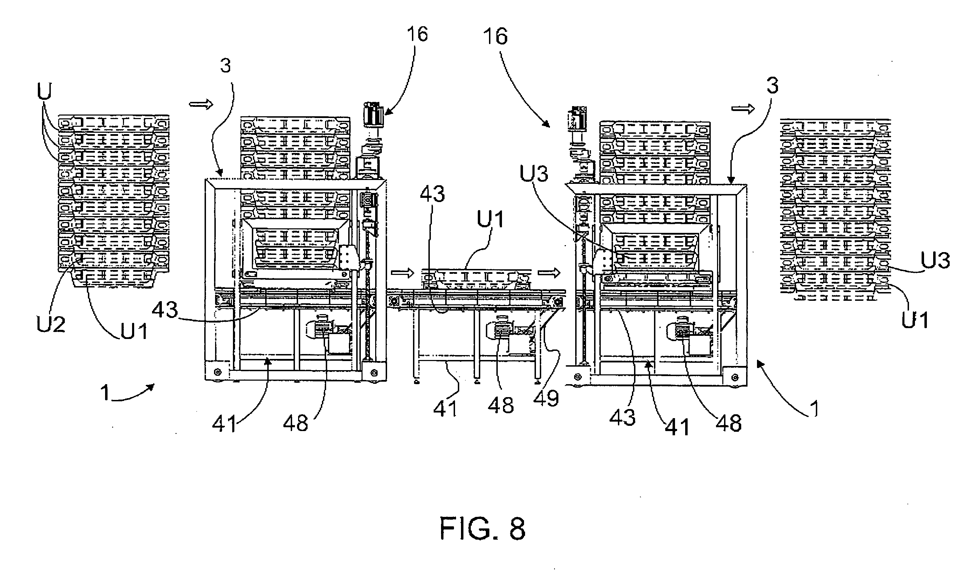

The system of the invention is also provided with conveyor means at a conveyor level below the lower position, shown in Figures 10, 11, 14, reached by the vertically moving holding means. The conveyor means, indicated by general reference 40, comprises a table structure 41 and a conveyor belt assembly for receiving the stackable units placed on the conveyor belt assembly. The conveyor belt assembly preferably comprises two side conveyor belts or chains 42, 43, actuated through corresponding sprockets 44, 45, 46, 47, by a second motor 48. Thus, the second motor is mounted in table 41 and connected to the conveyor belt assembly, by a belt 49 for example, Figure 8, for moving the sprockets and conveyor belts 42, 43 along a receiving and delivering direction to receive and deliver stackable units.

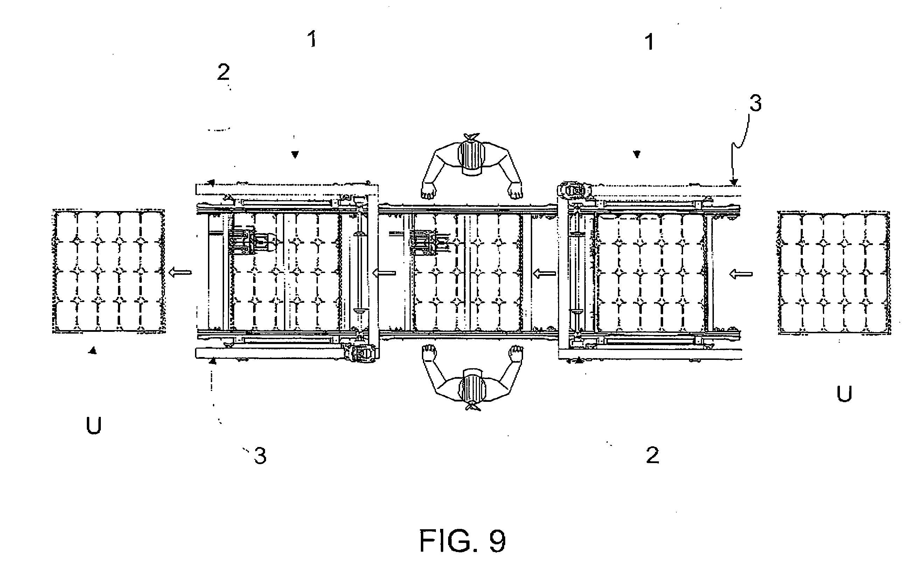

In operation, as illustrated in Figures 8-14, a stack of mold units or trays is delivered to the inventive system, as shown at the left hand side of Figures 8, 9, for example by a conveyor system, and the stack of units is placed into the inventive stacking/unstacking system, on the conveyor belts or chains. If the system is working in an unstacking pattern, sensor means, not shown, will detect the stack of units in the correct position and cylinder 38 will move pins 28-31 to the extended position in order to engage a predetermined part of the last but one unit in the bottom of the stack, namely U2, while unit U1 remains on the conveyor assembly free of connection with the pins. This situation is shown also in Figure 11. With the retaining pins engaged to unit U2, motor means 16 actuates screws to move carriers 11, 12 up in order to leave unit U1 resting on the conveyor assembly, as shown in Figure 12, and release unit U1 from the stack. In this position of the system, motor 48 actuates the conveyor belts or chains in order to move unit U1 out of the stack, as shown in Figure 13. Unit U1 may pass onto another intermediate conveyor assembly, as shown in Figures 8, 9. Figure 9 shows two individuals at both sides of the intermediate conveyor assembly, for inserting a food product into unit U1, for example. When the food product has been placed into unit U1, this unit is conveyed to the next station, namely the inventive system at the right side of Figures 8, 9. Now, the system is working according to a stacking pattern, therefore, retaining pins are engaged with the unit at the bottom of the stack, namely unit U3. When unit U1 is ready to enter the stacking system, motor means 16 actuates the screws to move carriers 11, 12 up with the stack of units retained in the carriers and lifted together. When the carriers reach the upper position thereof, as shown in Figures 12, 13, the location on the conveyor belts is empty and ready to receive unit U1, therefore the conveyor belts are actuated to receive and place the unit in the correct position. When in the correct position, motor 16 is actuated to move carriers 11, 12 down in order to place the stack onto unit U1 which is now part of the stack. The pins are retracted to their release position and if further units must be added to the stack, the carriers move down further and the pins are extended to engage unit U1 to lift the stack again as disclosed. If no further units are to be stacked in the stack, the conveyor system moves the stack out of the stacking system, as shown at the right hand side of Figures 8, 9. The cycle may be repeated as many times as necessary to stack and unstack units, or viceversa.

As it is clear for any expert in the art, the inventive system greatly differs from the conventional stacking/unstacking machines in that the molds are always stacked/unstacked at the same level, namely the bottom level. Therefore, the time taken by the inventive system for stacking/unstacking the same number of molds, as compared to the conventional system, is remarkably reduced.

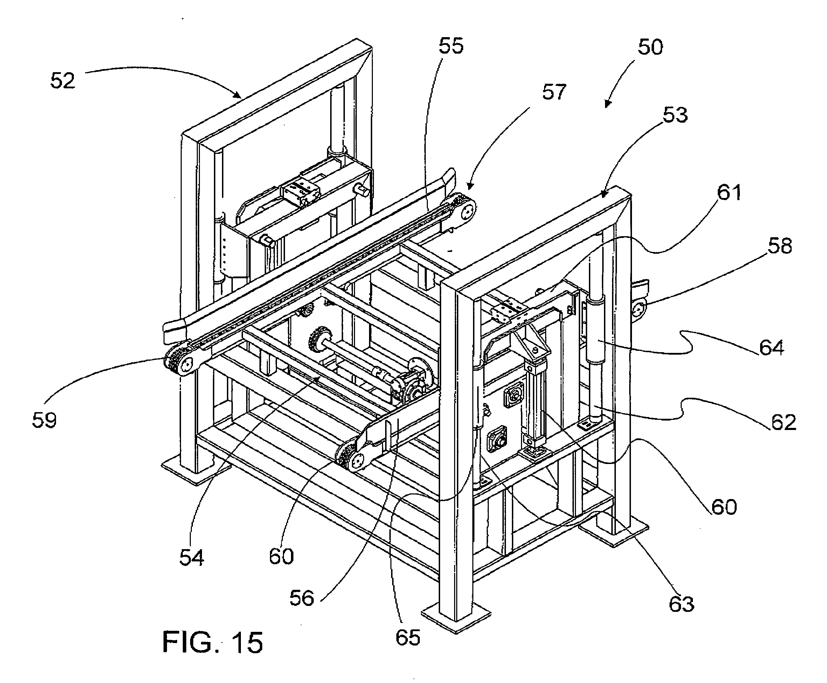

According to another embodiment of the invention, as shown in Figure 15, the system, indicated by general reference 50, also comprises a frame 51, with side frame portions 52, 53, and a conveyor assembly 54, directly mounted in the frame, and also preferably comprised of side conveyor belts or chains 55, 56, actuated by sprockets 57, 58, 59, 60. Different from the embodiment of Figures 1, the motor means comprise first motor means in the frame and wherein the holding carrier is directly actuated by said first motor means. The first motor means comprises a fluid actuated cylinder 60 connected to each holding carrier 61 for moving the holding carrier up and down along guides 62, 63 and by means of sliding connectors 64, 65. Only one carrier 61 and cylinder 60 have been indicated by this may be repeated exactly at the opposite side frame portion 52.

The system of the invention may be manufactured in any appropriate material but it is preferably made of stainless steel and other light materials.

While preferred embodiments of the present invention have been illustrated and described, it will be obvious to those skilled in the art that various changes and modifications may be made therein without departing from the scope of the invention as defined in the appended claims.

## Claims

1. A system for stacking and/or unstacking stackable units in a units-handling installation, the system comprising:
a frame for receiving and delivering at least one stackable unit,
vertically moving holding means for holding a stackable unit at a time and for moving up and down between a lower position and an upper position,
retaining means in said vertically moving holding means for moving between a retaining position to retain a stackable unit in the holding means and a releasing position to release the stackable unit from the holding means,
conveyor means at a conveyor level below the lower position reached by the vertically moving holding means, and
motor means for actuating the vertically moving holding means and the conveyor means.

2. The system of claim 1, wherein the frame comprises two side frame portions and a cross frame portion connected to the side frame portions and the vertically moving holding means comprise a holding carrier at each side frame portion.

3. The system of claim 2, wherein each side frame portion includes at least one vertical guide and the holding carrier associated to the corresponding side frame portion is slidably mounted on the at least one guide to move up and down along the at least one guide.

4. The system of claim 3, wherein the at least one vertical guide comprises two parallel guides and the holding carrier associated to the guides includes two side ears with each ear connected to at least one slider slidably mounted along one of the two guides.

5. The system of claim 4, wherein the motor means comprise a first motor mounted in said frame and connected to a screw and nut transmission assembly for moving the holding carrier up and down.

6. The system of claim 5, wherein the screw and nut transmission assembly comprise a vertical endless screw mounted in each side frame portion and a ball nut movable mounted along each endless screw, with one of the screws being actuated by the first motor and the other screw being connected to the one screw through a transmission bar.

7. The system of claim 6, wherein the holding carrier at each side frame portion has a bracket connected to the ball nut of the vertical endless screw.

8. The system of claim 5, wherein the motor means comprise a second motor connected to the conveyor means for moving the conveyor means along a receiving and delivering direction to receive and deliver stackable units.

9. The system of claim 2, wherein the retaining means, at each holding carrier, comprise a pair of retracting pins for moving between an extended position to engage and retain the stackable unit and a retracted position to disengaged and release the stackable unit.

10. The system of claim 9, wherein the retracting pins are connected to each other through a transmission mechanism actuated by an actuating cylinder.

11. The system of claim 8, wherein conveyor means comprises a table structure, said second motor mounted in the table structure, and a conveyor belt assembly for receiving the stackable units placed on the conveyor belt assembly, the second motor being connected to the conveyor belt assembly for moving the conveyor belt assembly along a receiving and delivering direction to receive and deliver stackable units.

12. The system of claim 11, wherein the conveyor belt assembly comprise two side conveyor belts.

13. The system of claim 3, wherein the motor means comprise first motor means in the frame and wherein the holding carrier is actuated by said first motor means.

14. The system of claim 13, wherein the first motor means comprises a fluid actuated cylinder connected to each holding carrier for moving the holding carrier up and down.
